# EUROPÄISCHE PATENTSCHRIFT

(11) **EP 3 356 855 B1**
(45) Veröffentlichungstag und Bekanntmachung des Hinweises auf die Patenterteilung: **23.02.2022**
(21) Anmeldenummer: 16770478.2
(22) Anmeldetag: 20.09.2016
(51) Int. Cl.: G01S 19/42, G01S 19/43, G01S 19/50, G01S 19/49

(54) **VERFAHREN ZUM AUSWÄHLEN VON LOKALISIERUNGSALGORITHMEN IN EINEM FAHRZEUG**
METHOD FOR SELECTING LOCATING ALGORITHMS IN A VEHICLE
PROCÉDÉ DE SÉLECTION D'ALGORITHMES DE LOCALISATION DANS UN VÉHICULE

(30) Priorität: 29.09.2015 DE 102015218810
(43) Veröffentlichungstag der Anmeldung: 08.08.2018
(73) Patentinhaber: Continental Teves AG & Co. OHG, 60488 Frankfurt am Main (DE)
(72) Erfinder: STÄHLIN, Ulrich, 65760 Eschborn (DE); ZALEWSKI, Michael, 60438 Frankfurt am Main (DE)
(74) Vertreter: Continental Corporation
(86) Internationale Anmeldenummer: PCT/EP2016/072323
(87) Internationale Veröffentlichungsnummer: WO 2017/055143

(56) Entgegenhaltungen:
- EP-A1- 2 816 374
- WO-A1-96/12973
- WO-A1-97/24583
- WO-A1-2012/167367
- DE-A1-102008 012 915
- US-A1- 2011 063 165

## Beschreibung

Die Erfindung betrifft ein Verfahren zum Auswählen von Lokalisierungsalgorithmen in einem Fahrzeug.

Für zahlreiche Funktionen in einem Fahrzeug ist die Kenntnis der Position des Fahrzeugs wichtig. Die Ermittlung der Position wird auch als Lokalisierung bezeichnet. Die Position kann insbesondere mittels eines Satellitennavigationssystems, auch als GNSS (Global Navigation Satellite System) bezeichnet, ermittelt werden.

Es ist im Stand der Technik bekannt, eine Lokalisierung durch Fusion von Satellitennavigations- und Fahrdynamikdaten durchzuführen. Beispiele hierfür sind Dead-Reckoning-Systeme oder Navigationssysteme. Ebenso ist es bekannt, eine Stillstandserkennung auf Basis von Fahrdynamiksensoren zu realisieren. Dies wird beispielsweise in elektronischen Stabilitätskontrollen (ESC) eingesetzt.

Es gibt zahlreiche Algorithmen zur Bestimmung der Position eines Fahrzeugs oder zur Mitwirkung bei einer solchen Positionsbestimmung, welche beispielsweise auf Satellitennavigation oder auf Fahrdynamiksensoren basieren. Typischerweise werden derartige Lokalisierungsalgorithmen unabhängig von der Fahrsituation auf die Optimierung der Gesamtperformance ausgelegt, so dass gemittelt eine optimale Position ermittelt werden kann. Dabei wird jedoch auf unterschiedliche Vorteile von jeweiligen Sensoren in unterschiedlichen Fahrsituationen nicht eingegangen.

Das Dokument WO 96/12973 A offenbart ein computerbasiertes System zur präzisen Bestimmung eines Orts für ein Landfahrzeug. Dabei werden Messungen unterschiedlicher Sensoren fusioniert.

Es ist deshalb eine Aufgabe der Erfindung, ein Verfahren bereitzustellen, mittels welchem eine Lokalisierung verbessert werden kann. Dies wird erfindungsgemäß durch ein Verfahren nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein Verfahren zum Auswählen von Lokalisierungsalgorithmen in einem Fahrzeug. Das Verfahren weist folgende Schritte auf:
- Erkennen eines Fahrzustands des Fahrzeugs, und
- Auswählen zumindest eines Lokalisierungsalgorithmus aus einer vorgegebenen Menge von Lokalisierungsalgorithmen basierend auf dem Fahrzustand.

Das erfindungsgemäße Verfahren erlaubt das Anpassen von Lokalisierungsalgorithmen je nach aktuellem Fahrzustand. Dabei können die Vorteile eines jeweiligen Lokalisierungsalgorithmus spezifisch genutzt werden. Dies erlaubt insgesamt eine wesentlich genauere und weniger fehleranfällige Lokalisierung.

Der Fahrzustand kann insbesondere mittels Satellitennavigation und/oder mittels einer Anzahl von Fahrdynamiksensoren erkannt werden. Der Fahrzustand kann auch mittels einer Stillstandserkennung erkannt werden, welche insbesondere in einer elektronischen Stabilitätskontrolle implementiert sein kann. Derartige Einrichtungen sind typischerweise in vielen Fahrzeugen ohnehin vorhanden, so dass hier kaum zusätzlicher Aufwand erforderlich ist.

Als Fahrzustand kann bevorzugt einer aus der folgenden Liste von Fahrzuständen erkannt werden:
- Fahrzeugstillstand,
- Normalfahrt im fahrdynamisch unauffälligen Bereich,
- Fahrt mit kontrolliert konstanter Geschwindigkeit, insbesondere mit Tempomat,
- Fahrt im fahrdynamischen Grenzbereich, insbesondere bezüglich der Beschleunigung.

Auch andere Fahrzustände sind jedoch denkbar.

Diese Fahrzustände oder eine Auswahl der Fahrzustände oder auch eine Auswahl oder alle dieser Fahrzustände kombiniert mit weiteren Fahrzuständen können beispielsweise als mögliche Optionen in einem das Verfahren ausführenden Modul gespeichert sein. Je nach Informationen, beispielsweise von Satellitennavigationsmodulen, Fahrdynamiksensoren oder Stillstandserkennung kann dann einer dieser Fahrzustände ausgewählt werden, so dass der momentane Fahrzustand in geeigneter Weise charakterisiert ist.

Unter einem Fahrzeugstillstand kann insbesondere ein Zustand verstanden werden, in welchem sich das Fahrzeug nicht über Grund bewegt. Beispielsweise kann dies bei angezogener Handbremse oder eingelegter Parkstellung des Getriebes der Fall sein. Auch ein Stillstand über wenige Sekunden, beispielsweise an einer roten Ampel, ohne Radbewegung bzw. Wheelticks, kann jedoch bereits ausreichend sein. Eine Normalfahrt im fahrdynamisch unauffälligen Bereich kann beispielsweise erkannt werden, wenn sich Beschleunigungs-, Querbeschleunigungs- und/oder Geschwindigkeitswerte unterhalb jeweiliger definierter Grenzwerte befinden.

Eine Fahrt mit kontrolliert konstanter Geschwindigkeit kann beispielsweise erkannt werden, wenn ein Tempomat eingeschaltet ist, welcher die Geschwindigkeit des Fahrzeugs konstant hält.

Eine Fahrt im fahrdynamischen Grenzbereich kann insbesondere erkannt werden, wenn bestimmte Werte, insbesondere eine Querbeschleunigung, einen jeweiligen bestimmten Schwellenwert übersteigen.

Erfindungsgemäß wird zumindest ein Lokalisierungsalgorithmus für ein Satellitennavigationssystem ausgewählt. Der Lokalisierungsalgorithmus für das Satellitennavigationssystem kann insbesondere aus folgender Menge von Lokalisierungsalgorithmen ausgewählt werden:
- Single-Point-Positionsbestimmung (SPP),
- Precision-Point-Positionsbestimmung (PPP), Geschwindigkeitsbestimmung.

Derartige Lokalisierungsalgorithmen sind an sich bekannt und haben sich für die Lokalisierung eines Fahrzeugs bewährt. Auch andere Lokalisierungsalgorithmen sind jedoch denkbar.

Bevorzugt wird zumindest ein Lokalisierungsalgorithmus für Fahrdynamiksensoren ausgewählt. Der Lokalisierungsalgorithmus für Fahrdynamiksensoren kann insbesondere aus folgender Menge von Lokalisierungsalgorithmen ausgewählt werden:
- Einspurmodell,
- adaptives Einspurmodell,
- Zweispurmodell,
- adaptives Zweispurmodell.

Derartige Lokalisierungsalgorithmen haben sich für Lokalisierungsfunktionen basierend auf Fahrdynamiksensoren bewährt. Auch andere Lokalisierungsalgorithmen sind jedoch denkbar.

Die Lokalisierungsalgorithmen für Fahrdynamiksensoren können beispielsweise mit Modellen kombiniert werden, welche insbesondere aus folgender Menge ausgewählt werden:
- Reifenmodell nach Burckhardt,
- Reifenmodell nach Pacejka.

Diese Modelle haben sich bewährt. Auch andere Modelle, insbesondere Reifenmodelle, können jedoch verwendet werden. Auch Modelle, insbesondere Reifenmodelle, können grundsätzlich ausgewählt werden, insbesondere in Abhängigkeit von den Fahrzuständen.

Gemäß einer Ausführung kann beim Erkennen eines Stillstands eine Positionsermittlung basierend auf Fahrdynamiksensoren abgeschaltet werden. Damit kann insbesondere eine Rechenlast in der im Fahrzeug zur Verfügung stehenden Elektronik verringert werden, da bei einem Stillstand eine Ermittlung einer Positionsänderung ohnehin nicht notwendig ist. Vorzugsweise kann gleichzeitig als Lokalisierungsalgorithmus für Satellitennavigation PPP ausgewählt werden. Dieser Lokalisierungsalgorithmus ist aufwändig und erfordert eine hohe Rechenlast. Durch die Ausführung während eines Stillstands des Fahrzeugs kann eine sehr genaue Position des Fahrzeugs ermittelt werden. Dies erlaubt bei einer nachfolgenden Fahrt des Fahrzeugs einen sehr guten Ausgangswert. Durch die bereits genannte Abschaltung der Positionsermittlung basierend auf Fahrdynamiksensoren steht für die Durchführung des PPP-Lokalisierungsalgorithmus sehr viel Rechenleistung zur Verfügung.

Bevorzugt wird beim Erkennen eines Stillstands folgender Schritt ausgeführt:
- Mitteilen des Stillstands an den Lokalisierungsalgorithmus, insbesondere zur möglichen Modellumschaltung, insbesondere in einem Satellitennavigationsmodul oder einem Fahrdynamikmodul.

Dies ermöglicht es, den erkannten Stillstand im Rahmen einer Lokalisierung zu nutzen, beispielsweise um im Stillstand nicht notwendige Funktionalitäten abzuschalten und stattdessen aufwändige Berechnungen durchzuführen, welche von Vorteil sein können, wenn sich das Fahrzeug wieder in Bewegung setzt.

Insbesondere ist im Fall des Stillstands eine Filterung der Position, eine Ermittlung von Sensorrauschen, eine Ermittlung des Rauschens von Positionsbestimmung und Geschwindigkeit oder eine Ermittlung des Rauschens einer basierend auf Satellitennavigation bestimmten Position möglich. Derartige Bestimmungen können beispielsweise für Satellitennavigation, aber auch für andere Sensoren durchgeführt werden. Beispielsweise kann ein Offset oder ein Rauschen eines Inertialsensors oder einer damit verbundenen Einheit ermittelt werden.

Dabei wird beispielsweise im Gegensatz zum üblichen "Zero-Velocity-Update" der Stillstand nicht nur dazu verwendet Fehler und Offsets zu ermitteln, sondern durch eine explizite Modellumschaltung dieser Fahrzustand mit bekannten Parametern dazu verwendet, beispielsweise sonst nicht oder nur schwer beobachtbare Rauschwerte zu ermitteln. Ebenso kann das zugrunde liegende Berechnungsmodell auf ein exakteres aber rechenintesiveres Modell umgestellt werden, das im Normalbetrieb die Rechenleistung des Systems überschreiten würde, nun aber die frei gewordene Rechenleistung nutzen kann. Dabei wird temporär eine hohe Genauigkeit/Performance erzielt, die das Gesamtsystem in diesem Moment und über eine gewisse Zeit darüber hinaus verbessert, ohne dabei auf zusätzliche Hardware oder leistungsfähigere CPU Ressourcen angewiesen zu sein. Dadurch kann bei gleichen Kosten eine bessere Performance erzielt werden.

Beim Erkennen einer Bewegung des Fahrzeugs wird als Lokalisierungsalgorithmus für Satellitennavigation vorzugsweise Geschwindigkeitsbestimmung oder SPP ausgewählt. Derartige Lokalisierungsalgorithmen für Satellitennavigation erlauben eine Bereitstellung der während der Fahrt typischerweise benötigten Informationen und sind nicht so rechenintensiv wie PPP. Somit bleibt mehr Rechenleistung für andere Funktionen übrig, welche während der Fahrt benötigt werden.

Beim Erkennen einer Fahrt mit kontrolliert konstanter Geschwindigkeit, insbesondere mit Tempomat, wird vorzugsweise als Lokalisierungsalgorithmus für Satellitennavigation SPP ausgewählt. Bevorzugt wird ferner eine Streuung von Werten der Satellitennavigation geschätzt, welche zur späteren Verwendung für stochastische Filter bei einem anderen Fahrzustand gespeichert werden. Beispielsweise kann eine Rauschmatrix bei einem Kalman-Filter verwendet werden.

Während der Fahrt des Fahrzeugs werden erfindungsgemäß Satellitendaten überwacht, jedoch nicht oder zumindest nicht aufwändig ausgewertet, und zwar erfindungsgemäß nicht mittels PPP. Während eines Stillstands des Fahrzeugs werden erfindungsgemäß zur Positionsbestimmung mittels PPP Informationen aus den überwachten Satellitendaten verwendet, und zwar insbesondere für ein Fast-Init und insbesondere ohne eine lange andauernde und aufwändige Initialisierungsphase.

Durch die beschriebene Überwachung von Satellitendaten während der Fahrt kann während des Stillstands der PPP-Lokalisierungsalgorithmus wesentlich schneller und effizienter ausgeführt werden. Beispielsweise kann wie erwähnt eine Initialisierungsphase übersprungen werden. Damit gelangt der Algorithmus schneller zu einer besonders genauen Position, und kann somit beispielsweise bereits eine 15 Sekunden dauernde Ampel-Stillstandszeit dafür nutzen, eine genaue PPP-Position zu bestimmen, ohne sich dabei einige Minuten lang im Stillstand initialisieren zu müssen.

Bei Bedarf, insbesondere wenn eine Positionsgenauigkeit zu schlecht ist, kann auch während der Fahrt auf eine Positionsbestimmung mittels PPP gewechselt werden. Dabei kann insbesondere auf Wissen aus der Überwachung zurückgegriffen werden. Damit kann beispielsweise auf die aufwändige, insbesondere zeitaufwändige Initialisierungsphase verzichtet werden. Diese ist typischerweise an einen Stillstand gebunden und benötigt deshalb während einer Fahrt sehr viel Zeit und Rechenleistung.

Bevorzugt werden Carrier-Phasen von Satelliten basierend auf Bewegungsinformationen des Fahrzeugs überwacht und eine Phasenmehrdeutigkeit wird nachgeführt und korrigiert. Damit können spezifische Funktionen realisiert werden.

Bevorzugt wird ansprechend auf einen bestimmten erkannten Fahrzustand, insbesondere einen Stillstand oder eine Fahrt mit kontrolliert konstanter Geschwindigkeit, eine Bestimmung von Offsets und/oder Modellparametern durchgeführt. Es kann auch ansprechend auf einen bestimmten erkannten Fahrzustand eine Überprüfung und/oder Plausibilisierung von Eingangssignalen oder Sicherheitsinformationen durchgeführt werden. Damit können insbesondere Informationen erhalten werden, welche wiederum in anderen Fahrzuständen zur Verbesserung der Lokalisierung nützlich sind.

Es können auch eine Modellumschaltung und/oder ein Ergebnisvergleich zwischen den unterschiedlichen Modellen bzw. Lokalisierungsalgorithmen durchgeführt werden, insbesondere um Fehler und/oder Manipulationen zu erkennen und/oder zu plausibilisieren. Hierbei können beispielsweise ein Safety-Sensor, ein Security-Sensor oder ein Umfeld-Sensor, beispielsweise in Form eines Radars, einer Kamera oder einer Fahrzeug-zu-X-Kommunikation als Lokalisierungsmodul für Plausibilisierungsanwendungen oder Ähnliches verwendet werden. Es kann ermittelt werden ob alle Lokalisierungsalgorithmen die gleichen Ergebnisse liefern oder voneinander abweichen. Wenn sie abweichen, kann der Grund hierfür ermittelt werden. Mögliche und entsprechend zu prüfende Ursachen sind beispielsweise Manipulation, Sensorstörung, Modellfehler aufgrund Verwendung in falscher Fahrsituation oder unterschiedliche Genauigkeit der Modelle.

Durch die Modellumschaltung kann je nach erkannter Fahrsituation die Rechenleistung optimiert werden. Die zur Fahrsituation bzw. zum Fahrzustand optimalen Algorithmen können ausgewählt werden, um eine optimale Performance zu realisieren. In schwierigen Situationen können beispielsweise aufwändigere Modelle verwendet werden, in einfacheren Situationen können einfachere, rechengünstigere Modelle verwendet werden, wodurch Rechenleistung und Stromverbrauch reduziert werden können. Die Ermittlung von relevanten Algorithmusparametern wie beispielsweise Reifenhalbmesser, Sensoroffsets oder Sensorrauschen kann an die jeweilige Fahrsituation angepasst werden. Dies erlaubt eine besonders gute Ausnutzung der vorhandenen Rechenleistung.

Diverse Algorithmusparameter wie beispielsweise Phasenmehrdeutigkeiten von Satelliten oder Sensordrift können bevorzugt durchgängig überwacht werden, insbesondere um eine schnelle Umschaltung zwischen Modellen oder Lokalisierungsalgorithmen ohne lange Initialisierungsphasen zu ermöglichen.

Eine Modellumschaltung bzw. eine Umschaltung zwischen Lokalisierungsalgorithmen kann auch jenseits der erkannten Fahrsituationen erfolgen, beispielsweise wenn andere Faktoren dies anzeigen. Beispielsweise kann dies erfolgen, wenn eine Positionsgenauigkeit zu schlecht ist oder ein Sensoroffset zu lange ohne Abgleich geblieben ist.

Die Erfindung betrifft des Weiteren ein elektronisches Steuerungsmodul, welches dazu konfiguriert ist, ein erfindungsgemäßes Verfahren auszuführen. Außerdem betrifft die Erfindung ein nichtflüchtiges computerlesbares Speichermedium, welches Programmcode enthält, bei dessen Ausführung ein Prozessor ein erfindungsgemäßes Verfahren ausführt. Bezüglich des erfindungsgemäßen Verfahrens kann dabei jeweils auf alle beschriebenen Ausführungen und Varianten zurückgegriffen werden.

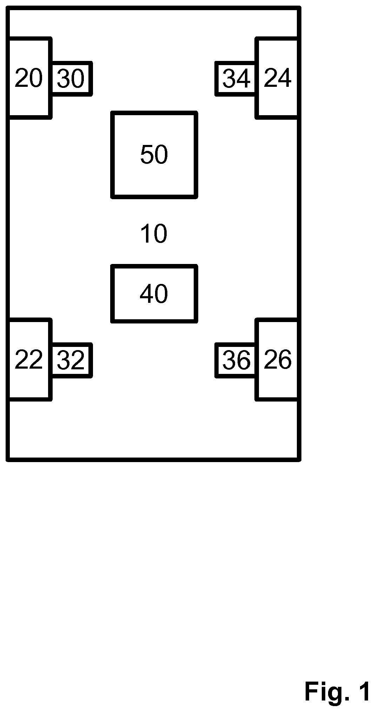

Weitere Merkmale und Vorteile wird der Fachmann aus den nachfolgend mit Bezug auf die beigefügte Zeichnung beschriebenen Ausführungsbeispielen entnehmen. Dabei zeigt Fig. 1 schematisch ein Fahrzeug, in welchem ein erfindungsgemäßes Verfahren ausgeführt wird.

Fig. 1 zeigt ein Fahrzeug 10. Das Fahrzeug 10 weist insgesamt vier Räder 20, 22, 24, 26 auf. Jedem Rad 20, 22, 24, 26 ist ein jeweiliger Raddrehzahlsensor 30, 32, 34, 36 zugeordnet. Damit können die jeweiligen Raddrehzahlen der Räder 20, 22, 24, 26 ermittelt werden.

Das Fahrzeug 10 weist ferner ein Satellitennavigationsmodul 40 auf. Das Satellitennavigationsmodul 40 ist dazu ausgebildet, Satellitensignale zu empfangen, um die Position und die Geschwindigkeit des Fahrzeugs 10 zu bestimmen.

Das Fahrzeug 10 weist des Weiteren ein elektronisches Steuerungsmodul 50 auf, welches über einen nicht dargestellten CAN-Bus mit den Raddrehzahlsensoren 30, 32, 34, 36 sowie mit dem Satellitennavigationsmodul 40 verbunden ist. In der Steuerungsvorrichtung 50 werden Lokalisierungsalgorithmen zur Positionsbestimmung des Fahrzeugs ausgeführt, wobei sowohl Lokalisierungsalgorithmen basierend auf den Raddrehzahlsensoren, welche auch als Fahrdynamiksensoren bezeichnet werden können, wie auch Lokalisierungsalgorithmen basierend auf Satellitennavigation verwendet werden.

Als Lokalisierungsalgorithmen für Fahrdynamiksensoren stehen die folgenden Lokalisierungsalgorithmen zur Verfügung:
- Einspurmodell,
- adaptives Einspurmodell,
- Zweispurmodell,
- adaptives Zweispurmodell.

Als damit zusammenwirkende Reifenmodelle stehen die folgenden Reifenmodelle zur Verfügung:
- Reifenmodell nach Burckhardt,
- Reifenmodell nach Pacejka.

Als Lokalisierungsalgorithmen für Satellitennavigation stehen die folgenden Lokalisierungsalgorithmen zur Verfügung:
- Single-Point-Positionsbestimmung (SPP),
- Precision-Point-Positionsbestimmung (PPP),
- Geschwindigkeitsbestimmung.

Die Steuerungsvorrichtung 50 ist dazu ausgebildet, basierend auf den Daten der Raddrehzahlsensoren 30, 32, 34, 36 sowie des Satellitennavigationsmoduls 40 einen Fahrzustand zu erkennen, wobei basierend auf den gelieferten Daten der jeweilige Fahrzustand in einen der folgenden Fahrzustände klassifiziert wird:
- Fahrzeugstillstand,
- Normalfahrt im fahrdynamisch unauffälligen Bereich,
- Fahrt mit kontrolliert konstanter Geschwindigkeit,
- Fahrt im fahrdynamischen Grenzbereich.

Basierend auf dem erkannten Fahrzustand werden die Lokalisierungsalgorithmen für Satellitennavigation und für Fahrdynamiksensoren sowie ein Reifenmodell ausgewählt. Dies erlaubt eine Optimierung der Positionsbestimmung und eine vorteilhafte Ausnutzung der vorhandenen Rechenleistung.

Nachfolgend werden insgesamt sieben Beispiele gegeben, welche in der Steuerungsvorrichtung 50 vorteilhaft implementiert sein können.

### Beispiel 1:

Wird ein Fahrzeugstillstand erkannt, ist es nicht notwendig, die Position auf Basis der Fahrdynamiksensoren zu ermitteln (es bewegt sich ja nichts). Stattdessen wird die vorhandene Rechenleistung verwendet, um auf Basis von Satellitennavigation eine Position mit PPP zu ermitteln. Dadurch kann mit länger dauerndem Stillstand die Ausgangsposition für die danach folgende Fahrt immer präziser bestimmt werden. Anschließend wird dann, sobald sich das Fahrzeug wieder bewegt, bei der Satellitennavigation auf eine Geschwindigkeitsbestimmung umgeschaltet und auf Basis der Fahrdynamikdaten ebenfalls die Bewegung geschätzt, beispielsweise auf Basis eines durch Satellitennavigationsdaten adaptierten Fahrdynamikmodells (Zweispurmodell, etc.)

Da dem Verarbeitungsalgorithmus bzw. Lokalisierungsalgorithmus, im Gegensatz zum reinen Satellitennavigationssensor, bekannt ist, dass sich das Fahrzeug im Stillstand befindet, sich dessen Position also nicht ändert, kann basierend auf diesem Wissen der Berechnungsalgorithmus für PPP gestützt und damit optimiert werden. Auf diese Weise kann die Initialisierungszeit zur Lokalisierung mittels PPP von einigen Minuten auf wenige Sekunden verkürzt werden.

### Beispiel 2:

Wie bei Beispiel 1 wird im Stillstand ein Precision Point Positioning (PPP) verwendet. Jedoch wird bei Weiterfahrt aus GNSS ein Single Point Positioning (SPP) ermittelt und mit den Fahrdynamikdaten die Bewegung ermittelt. Auf diese Weise kann zu jedem Stillstand der rechenaufwendige PPP durchgeführt werden um eine möglichst hohe Absolutgenauigkeit zu erreichen. Basierend auf der genauen Position kann anschließend mit dem "einfacheren" SPP-Algorithmus und Fahrdynamikdaten die hochgenaue Position gestützt werden.

Auf diese Weise kann jeweils im Stillstand die Rechenlast für PPP verwendet werden um hochgenaue Positionen zu erhalten, während der Fahrt wird die Rechenlast auf Berechnung mit Fahrdynamikdaten verwendet. Durch diese Optimierung lässt sich mit geringerer Rechenlast eine höhere Genauigkeit erreichen wie mit den einzelnen Verfahren.

### Beispiel 3:

Während einer kontrolliert konstanten Geschwindigkeit (z.B. Tempomat) wird mittels Satellitennavigation (GNSS) eine Single-Point Positioning (SPP) durchgeführt. Da bekannt ist, dass das Fahrzeug mit konstanter Geschwindigkeit fährt, wird dabei die Streuung der Werte aus GNSS, aber auch der anderen verwendeten Sensoren, geschätzt und anschließend beispielsweise bei Normalfahrt für entsprechende stochastische Filter verwendet (z.B. Rauschmatrix für Kalmanfilter).

### Beispiel 4:

Bei Verwendung der Fahrzeuginformationen kann, durch Wissen über die durchgeführte Bewegung, auch während der Fahrt ein PPP durchgeführt werden und die Initialisierung des PPP ist nicht an den Stillstand gebunden.

Sollte die Positionsgenauigkeit nicht mehr den Anforderungen entsprechen, kann auch während der Fahrt (guten Satellitenempfang vorausgesetzt) auf PPP umgeschaltet werden um, basierend auf den durchgängig beobachteten Daten, einen schnellen PPP-Fix zu erreichen um die Genauigkeit zu erhöhen. Anschließend kann wieder auf SPP umgeschaltet werden.

### Beispiel 5:

Zudem können während der Fahrt auch mittels SPP die Phase und zusätzliche Dienste überwacht werden, um während des Stillstandes - durch Bereitstellung der getrackten/bzw. berechneten Satellitendaten (z.B. hochauflösende Carrierphaseninformation, gelöste Mehrdeutigkeit der Carrierphase, Hochgenaue Ephemeridendaten und Ionosphärendaten aus Datenkorrekturdiensten [DGPS/SBAS/etc.]) - ein schnelles PPP durchführen zu können (ohne alle Daten von Grund auf zu berechnen bzw. empfangen zu müssen).

Wird die Bewegungsinformation des Fahrzeuges als Grundlage für das Tracken der Carrierphasen verwendet (Auflösen der Carrierphasen-Mehrdeutigkeit ist Grundlage für PPP), kann selbst bei einem Phasenabriss durch Abschattung, Reflektion, Multipath oder andere Effekte sehr genau abgeschätzt werden wie sich die Phasenmehrdeutigkeit weiterentwickelt. Damit kann die Störempfindlichkeit des PPP auf Phasenabrisse reduziert werden. Dies macht den Hauptnachteil beim Umschalten auf SPP (Standard, ohne Tracking) und wieder zurück aus.

Durch ein optimiertes Beobachten relevanter Daten, kann während der Fahrt auf die aufwendige Berechnung verzichtet werden, ohne für das Umschalten zum PPP auf wichtige Informationen zu verzichten.

### Beispiel 6:

Befindet sich das Fahrzeug gerade in einem günstigen Zustand zum Abgleich von Fahrdynamikwerten (Bestimmung von Sensoroffsets im Stillstand/Konstantfahrt, Bestimmung des Reifenhalbmessers bei gutem Satellitenempfang und Geradeausfahrt, u.s.w.) kann die Lokalisierungsalgorithmik auf entsprechende Berechnungsmodelle umstellen.

### Beispiel 7:

Die Modellumschaltung kann über die Lokalisierungsalgorithmik hinaus auch auf eine Modellumschaltung zur Prüfung/Plausibilisierung von Eingangssignalen und Security erweitert werden. Beispielsweise kann, wie weiter eben bereits erwähnt, ein Abgleich zwischen unterschiedlichen Algorithmen oder Modellen durchgeführt werden. Wenn zum Beispiel die Position und Bewegung sehr genau bekannt ist, können die Eingangssignale dagegen verglichen werden um zum Beispiel Manipulation oder Störungen zu erkennen, während in einem "unbekannten" Zustand auf eine solche Prüfung verzichtet werden kann um Fehler zu vermeiden und Rechenzeit zu sparen.

Eine solche Modellumschaltung kann auch zyklisch durchgeführt werden, bzw. an bestimmte Bedingungen (Abgleich Eigenposition mit sporadisch verfügbaren Informationen aus Umfeld z.B. Umfeldsensorik, anderen Car2X Teilnehmer, etc.) gebunden sein.

### Beispiel 8:

Befindet sich das Fahrzeug gerade im fahrdynamisch unauffälligen Bereich kann ein weniger rechenintensiver Berechnungsalgorithmus - beispielsweise das Einspurmodell - benutzt werden, da die Genauigkeit in diesem Bereich ausreichend ist. Wechselt das Fahrzeug hingegen beispielsweise in starke Kurvenfahrten, oder ergeben sich anspruchsvolle Situationen im fahrdynamischen Grenzbereich, so kann auf ein genaueres aber rechenintensiveres Modell - beispielsweise ein Zweispurmodell - gewechselt werden. Genauso können auch die verwendeten Reifenmodelle
- Reifenmodell nach Burckhardt,
- Reifenmodell nach Pacejka,
an die jeweilige Fahrsituation angepasst werden und die dabei verwendete Parameter oder die Modelle können jeweils umgeschaltet werden.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden dass keine weiteren Schritte ausgeführt werden. Es können jedoch grundsätzlich auch weitere Schritte ausgeführt werden, auch solche welche nicht erwähnt sind.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen.

Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Auswählen von Lokalisierungsalgorithmen in einem Fahrzeug (10),
wobei das Verfahren folgende Schritte aufweist:
- Erkennen eines Fahrzustands des Fahrzeugs (10), und
- Auswählen zumindest eines Lokalisierungsalgorithmus aus einer vorgegebenen Menge von Lokalisierungsalgorithmen basierend auf dem Fahrzustand, wobei zumindest ein Lokalisierungsalgorithmus für ein Satellitennavigationssystem (40) ausgewählt wird,
**dadurch gekennzeichnet, dass**
- während einer Fahrt des Fahrzeugs (10) Satellitendaten überwacht werden, jedoch nicht mittels Precision-Point Positionsbestimmung, PPP, ausgewertet werden, und
- während eines Stillstands des Fahrzeugs (10) Satellitendaten überwacht werden und zur Positionsbestimmung mittels Precision-Point Positionsbestimmung Informationen aus diesen während des Stillstands des Fahrzeugs (10) überwachten Satellitendaten verwendet werden.

2. Verfahren nach Anspruch 1,
wobei der Fahrzustand mittels Satellitennavigation und/oder mittels einer Anzahl von Fahrdynamiksensoren (30, 32, 34, 36) erkannt wird.

3. Verfahren nach einem der vorhergehenden Ansprüche,
wobei der Fahrzustand mittels einer Stillstandserkennung, insbesondere in einer elektronischen Stabilitätskontrolle, erkannt wird.

4. Verfahren nach einem der vorhergehenden Ansprüche,
wobei als Fahrzustand einer aus der folgenden Liste von Fahrzuständen erkannt wird:
- Fahrzeugstillstand,
- Normalfahrt im fahrdynamisch unauffälligen Bereich,
- Fahrt mit kontrolliert konstanter Geschwindigkeit, insbesondere mit Tempomat,
- Fahrt im fahrdynamischen Grenzbereich, insbesondere bezüglich Querbeschleunigung.

5. Verfahren nach Anspruch 4,
wobei der Lokalisierungsalgorithmus für das Satellitennavigationssystem (40) aus der folgenden Menge von Lokalisierungsalgorithmen ausgewählt wird:
- Single-Point Positionsbestimmung (SPP),
- Precision-Point Positionsbestimmung (PPP),
- Geschwindigkeitsbestimmung.

6. Verfahren nach einem der vorhergehenden Ansprüche, wobei zumindest ein Lokalisierungsalgorithmus für Fahrdynamiksensoren (30, 32, 34, 36) ausgewählt wird.

7. Verfahren nach Anspruch 6,
wobei der Lokalisierungsalgorithmus für Fahrdynamiksensoren (30, 32, 34, 36) aus der folgenden Menge von Lokalisierungsalgorithmen ausgewählt wird:
- Einspurmodell,
- Adaptives Einspurmodell,
- Zweispurmodell,
- Adaptives Zweispurmodell;
und/oder wobei ein Reifenmodell aus der folgenden Menge von Reifenmodellen ausgewählt wird:
- Reifenmodell nach Burckhardt,
- Reifenmodell nach Pacejka.

8. Verfahren nach einem der vorhergehenden Ansprüche, wobei beim Erkennen eines Stillstands
- eine Positionsermittlung basierend auf Fahrdynamiksensoren (30, 32, 34, 36) abgeschaltet wird,
und
- als Lokalisierungsalgorithmus für Satellitennavigation PPP ausgewählt wird.

9. Verfahren nach einem der vorhergehenden Ansprüche,
wobei beim Erkennen eines Stillstands folgender Schritt ausgeführt wird:
- Mitteilen des Stillstands an den Lokalisierungsalgorithmus, insbesondere zur möglichen Modellumschaltung, insbesondere in einem Satellitennavigationsmodul (40) oder einem Fahrdynamikmodul.

10. Verfahren nach einem der vorhergehenden Ansprüche,
wobei beim Erkennen einer Bewegung des Fahrzeugs als Lokalisierungsalgorithmus für Satellitennavigation Geschwindigkeitsbestimmung oder SPP ausgewählt wird.

11. Verfahren nach einem der vorhergehenden Ansprüche,
wobei beim Erkennen einer Fahrt mit kontrolliert konstanter Geschwindigkeit, insbesondere mit Tempomat, als Lokalisierungsalgorithmus für Satellitennavigation SPP ausgewählt wird, wobei bevorzugt ferner eine Streuung von Werten der Satellitennavigation geschätzt wird, welche zur späteren Verwendung für stochastische Filter bei einem anderen Fahrzustand gespeichert werden.

12. Verfahren nach einem der vorhergehenden Ansprüche, wobei
- während eines Stillstands des Fahrzeugs (10) zur Positionsbestimmung mittels PPP Informationen aus den überwachten Satellitendaten verwendet werden, und zwar für ein Fast-Init und insbesondere ohne eine Initialisierungsphase.

13. Verfahren nach einem der vorhergehenden Ansprüche, wobei
- Carrierphasen von Satelliten basierend auf Bewegungsinformationen des Fahrzeugs (10) überwacht und eine Phasenmehrdeutigkeit nachgeführt und korrigiert wird.

14. Verfahren nach einem der vorhergehenden Ansprüche, wobei
- ansprechend auf einen bestimmten erkannten Fahrzustand, insbesondere einen Stillstand oder eine Fahrt mit kontrolliert konstanter Geschwindigkeit, eine Bestimmung von Offsets und/oder Modellparametern und/oder Rauschwerten erfolgt,
und/oder
- ansprechend auf einen bestimmten erkannten Fahrzustand eine Überprüfung und/oder Plausibilisierung von Eingangssignalen oder Sicherheitsinformationen durchgeführt wird.

## Claims

1. Method for selecting localization algorithms in a vehicle (10),
wherein the method comprises the following steps:
- recognizing a driving state of the vehicle (10), and
- selecting at least one localization algorithm from a predefined set of localization algorithms based on the driving state, wherein at least one localization algorithm for a satellite navigation system (40) is selected,
**characterized in that**
- satellite data are monitored during a journey of the vehicle (10) but are not evaluated by way of precision-point position determination, PPP, and
- satellite data are monitored while the vehicle (10) is stationary and information from these satellite data monitored while the vehicle (10) is stationary is used for position determination by way of precision-point position determination.

2. Method according to Claim 1,
wherein the driving state is recognized by way of satellite navigation and/or by way of a number of driving dynamics sensors (30, 32, 34, 36).

3. Method according to either of the preceding claims, wherein the driving state is recognized by way of stationary-state recognition, in particular in an electronic stability check.

4. Method according to one of the preceding claims, wherein one from the following list of driving states is recognized as the driving state:
- vehicle stationary,
- normal travel in the range with unremarkable driving dynamics,
- travel at a controlled constant speed, in particular using cruise control,
- travel in the driving dynamics limit range, in particular with regard to transverse acceleration.

5. Method according to Claim 4,
wherein the localization algorithm for the satellite navigation system (40) is selected from the following set of localization algorithms:
- single-point position determination (SPP),
- precision-point position determination (PPP),
- speed determination.

6. Method according to one of the preceding claims, wherein at least one localization algorithm for driving dynamics sensors (30, 32, 34, 36) is selected.

7. Method according to Claim 6,
wherein the localization algorithm for driving dynamics sensors (30, 32, 34, 36) is selected from the following set of localization algorithms:
- single-lane model,
- adaptive single-lane model,
- two-lane model
- adaptive two-lane model;
and/or wherein a tyre model is selected from the following set of tyre models:
- Burckhardt tyre model,
- Pacejka tyre model.

8. Method according to one of the preceding claims, wherein, upon recognition of a stationary state,
- position determination based on driving dynamics sensors (30, 32, 34, 36) is deactivated,
and
- PPP is selected as the localization algorithm for satellite navigation.

9. Method according to one of the preceding claims, wherein the following step is performed upon recognition of a stationary state:
- communicating the stationary state to the localization algorithm, in particular for a possible model change, in particular in a satellite navigation module (40) or a driving dynamics module.

10. Method according to one of the preceding claims, wherein, upon recognition of a movement of the vehicle, speed determination or SPP is selected as the localization algorithm for satellite navigation.

11. Method according to one of the preceding claims, wherein, upon recognition of travel at a controlled constant speed, in particular using cruise control, SPP is selected as the localization algorithm for satellite navigation, wherein a scatter of satellite navigation values is preferably furthermore estimated and stored for subsequent use for stochastic filters in another driving state.

12. Method according to one of the preceding claims, wherein
- information from the monitored satellite data is used for position determination by way of PPP while the vehicle (10) is stationary, specifically for a fast-init and in particular without an initialization phase.

13. Method according to one of the preceding claims, wherein
- carrier phases of satellites are monitored based on movement information from the vehicle (10) and a phase ambiguity is tracked and corrected.

14. Method according to one of the preceding claims, wherein
- offsets and/or model parameters and/or noise values are determined in response to a particular recognized driving state, in particular a stationary state or travel at a controlled constant speed, and/or
- a check and/or plausibility check on input signals or safety information is performed in response to a particular recognized driving state.

## Revendications

1. Procédé de sélection d'algorithmes de localisation dans un véhicule (10),
le procédé comprenant les étapes suivantes :
- détecter un état de roulement du véhicule (10) et
- sélectionner au moins un algorithme de localisation parmi un ensemble spécifié d'algorithmes de localisation sur la base de l'état de roulement, au moins un algorithme de localisation étant sélectionné pour un système de navigation par satellite (40), **caractérisé en ce que**
- pendant que le véhicule (10) roule, des données satellitaires sont surveillées sans être évaluées par positionnement précis du point PPP, et
- des données satellitaires sont surveillées pendant que le véhicule (10) est à l'arrêt, et des informations provenant de ces données satellitaires surveillées sont utilisées pour déterminer la position par positionnement précis du point pendant que le véhicule (10) est à l'arrêt.

2. Procédé selon la revendication 1,
l'état de roulement étant détecté au moyen d'une navigation par satellite et/ou au moyen d'un certain nombre de capteurs de dynamique de roulement (30, 32, 34, 36) .

3. Procédé selon l'une des revendications précédentes, l'état de roulement étant détecté au moyen d'une détection à l'arrêt, notamment lors d'un contrôle de stabilité électronique.

4. Procédé selon l'une des revendications précédentes, l'un des états de roulement de la liste suivante étant détecté comme état de roulement :
- véhicule à l'arrêt,
- roulement normal dans une zone non-suspect en termes de dynamique de roulement,
- roulement à vitesse constante contrôlée, notamment au moyen d'un régulateur de vitesse,
- roulement dans la plage limite de dynamique de roulement, notamment en ce qui concerne l'accélération transversale.

5. Procédé selon la revendication 4,
l'algorithme de localisation étant sélectionné pour le système de navigation par satellite (40) parmi l'ensemble suivant d'algorithmes de localisation :
- positionnement unique du point (SPP),
- positionnement précis du point (PPP),
- détermination de la vitesse.

6. Procédé selon l'une des revendications précédentes, au moins un algorithme de localisation étant sélectionné pour des capteurs de dynamique de roulement (30, 32, 34, 36).

7. Procédé selon la revendication 6,
l'algorithme de localisation étant sélectionné pour des capteurs de dynamique de roulement (30, 32, 34, 36) parmi l'ensemble d'algorithmes de localisation suivant :
- modèle monotrace,
- modèle monotrace adaptatif,
- modèle double trace,
- modèle double trace adaptatif ;
et/ou un modèle de pneumatique étant sélectionné parmi l'ensemble de modèles de pneumatique suivant :
- modèle de pneumatique selon Burckhardt,
- modèle de pneumatique selon Pacejka.

8. Procédé selon l'une quelconque des revendications précédentes,
lors de la détection d'un arrêt
- un positionnement étant désactivé sur la base de capteurs de dynamique de roulement {30, 32, 34, 36), et
- PPP étant sélectionné comme algorithme de localisation pour la navigation par satellite.

9. Procédé selon l'une des revendications précédentes,
lors de la détection d'un arrêt, l'étape suivante étant réalisée :
- notifier l'arrêt à l'algorithme de localisation, notamment pour un éventuel changement de modèle, notamment dans un module de navigation par satellite (40) ou un module de dynamique de roulement.

10. Procédé selon l'une des revendications précédentes, lors de la détection d'un mouvement du véhicule, la détermination de la vitesse ou SPP étant sélectionné comme algorithme de localisation pour la navigation par satellite.

11. Procédé selon l'une des revendications précédentes, lors de la détection d'un roulement à vitesse constante contrôlée, notamment au moyen d'un régulateur de vitesse, SPP étant sélectionné comme algorithme de localisation pour la navigation par satellite, une dispersion de valeurs de la navigation par satellite étant de préférence également estimée, laquelle dispersion pouvant être mémorisée en vue d'une utilisation ultérieure pour des filtres stochastiques dans un autre état de roulement.

12. Procédé selon l'une des revendications précédentes,
- pendant que le véhicule (10) est à l'arrêt, des informations provenant des données satellitaires surveillées pouvant être utilisées pour le positionnement au moyen de PPP, notamment pour une initialisation rapide et en particulier sans phase d'initialisation.

13. Procédé selon l'une des revendications précédentes,
- les phases de porteuse des satellites étant surveillées sur la base d'informations de mouvement du véhicule (10) et une ambiguïté de phase étant suivie et corrigée.

14. Procédé selon l'une des revendications précédentes,
- des décalages et/ou des paramètres de modèle et/ou des valeurs de bruit étant déterminés en réponse à un état de roulement détecté déterminé, notamment un arrêt ou un roulement à vitesse constante contrôlée, et/ou
- une surveillance et/ou une plausibilité de signaux d'entrée ou d'informations de sécurité étant effectuées en réponse à un état de roulement détecté déterminé.
